Europäisches Patentamt

European Patent Office

Office européen des brevets

(19)

(11) **EP 0 786 096 B1**

(12) **FASCICULE DE BREVET EUROPEEN**

(45) Date de publication et mention
de la délivrance du brevet:
**05.01.2000 Bulletin 2000/01**

(21) Numéro de dépôt: **95934689.1**

(22) Date de dépôt: **12.10.1995**

(51) Int Cl.⁷: $G01S\ 13/90$, $G01S\ 13/87$

(86) Numéro de dépôt international:
**PCT/FR95/01332**

(87) Numéro de publication internationale:
**WO 96/12201 (25.04.1996 Gazette 1996/18)**

(54) **PROCEDE POUR EVALUER DES EFFETS NON-EUCLIDIENS AFFECTANT UNE IMAGE OBTENUE AVEC UN RADAR SPATIAL, ET SATELLITE POUR SA MISE EN UVRE**

**VERFAHREN ZUM BEWERTEN VON NICHTEUCLIDISCHEN EFFEKTEN IN EINEM MIT EINEM LUFT-RADAR ERZEUGTEM BILD, UND SATTELIT ZU DESSEN DURCHFÜHRUNG**

**METHOD FOR EVALUATING THE NON-EUCLIDEAN EFFECTS AFFECTING AN IMAGE PRODUCED BY A SATELLITE RADAR AND SATELLITE FOR CARRYING OUT SAID METHOD**

(84) Etats contractants désignés:
**DE FR GB IT**

(30) Priorité: **13.10.1994 FR 9412220**

(43) Date de publication de la demande:
**30.07.1997 Bulletin 1997/31**

(73) Titulaire: **CENTRE NATIONAL D'ETUDES SPATIALES**
**75001 Paris (FR)**

(72) Inventeur: **MASSONNET, Didier, Henri**
**F-31650 Saint-Orens-de-Game-Ville (FR)**

(74) Mandataire: **Schrimpf, Robert et al**
**Cabinet Regimbeau**
**26, Avenue Kléber**
**75116 Paris (FR)**

(56) Documents cités:
**US-A- 5 332 999**

**Description**

La présente invention concerne le domaine de l'imagerie par satellite d'observation, et plus précisément de l'imagerie par radar spatial.

L'imagerie par radar spatial est différente de l'imagerie optique, bien connue, et dont les principes physiques sont proches de ceux de la vision humaine. L'image obtenue par un radar spatial diffère tout d'abord par son contenu de celle obtenue au moyen d'une optique traditionnelle puisque le paysage est observé par le radar spatial avec une longueur d'onde décimétrique (de 3 à 25 cm), bien supérieure à celle, micrométrique, exploitée dans l'optique traditionnelle. L'image est également différente dans son principe d'obtention puisque le radar spatial est un instrument actif qui comporte sa propre source d'éclairement du paysage, ce qui permet d'observer de jour comme de nuit et, par un choix approprié de la longueur d'onde utilisée, d'être insensible aux nébulosités. Il s'agit donc d'une imagerie "tous temps", dont les avantages opérationnels sont nombreux. En revanche, comme il est difficile de déployer dans l'espace des antennes de plus dix mètres, la résolution angulaire naturelle des radars spatiaux est très mauvaise, de l'ordre du demi-degré (alors que l'oeil humain fait dix fois mieux). L'imagerie par radar ne fait donc pas appel à la résolution naturelle de l'instrument. La résolution, dans le sens perpendiculaire à la direction de vol, est obtenue par l'analyse à bord du satellite du temps de retour des échos (ce qui est le principe de tous les radars) et, dans le sens parallèle à la direction de vol, par un processus numérique dit de "synthèse d'ouverture", réalisé au sol et conduisant à un calcul assez volumineux. Chacune des lignes d'une "image" radar correspond à une impulsion émise par le radar, transformée en une suite d'échantillons classés selon leur temps de retour comme les indices de colonne de l'image. Ces échantillons sont des nombres complexes représentatifs de l'amplitude et de la phase de l'onde réfléchie. Le processus numérique de synthèse d'ouverture précité conserve la nature complexe des signaux traités, de sorte qu'en plus de sa principale qualité opérationnelle, qui est d'être insensible aux nébulosités et de pouvoir opérer de nuit, un radar spatial installé sur un satellite permet la mesure de petits déplacements par la technique d'interférométrie.

La phase de l'onde réfléchie contient en effet des informations sur la position, la répartition et la nature radioélectrique des éléments constitutifs du paysage illuminé par le radar, encore appelés cibles (telles que cailloux, branches, etc...). Par comparaison d'images radar prises à des dates différentes dans des conditions presque identiques, l'information de position peut être isolée des autres en construisant un interférogramme. L'interférométrie par radar a été proposée et testée depuis près de vingt ans déjà, et l'on se reportera utilement à la publication L. C. Graham dans Proceedings IEEE vol. 62 N° 6, Juin 1974, intitulée "Synthetic interferometer radar for topographic mapping".

L'information de phase est influencée par trois facteurs dont les deux premiers sont inconnus :

- le déphasage causé par la réflexion de l'onde radar sur les cibles, et lié aux propriétés électromagnétiques de celles-ci ;
- le déphasage lié à la position relative des cibles à l'intérieur d'un même élément d'image ou pixel. La phase résultante d'un pixel est le fruit d'une combinaison complexe des contributions des différentes cibles présentes à l'intérieur du pixel, pondérées par leurs amplitudes respectives ;
- le déphasage éventuel lié à un déplacement des cibles ou à une variation des conditions d'observation.

On suppose, lors de la mise en oeuvre des techniques d'interférométrie par radar, que les deux premiers facteurs, à défaut d'être connus, sont stables dans le temps. Cette hypothèse sous-entend, pour le premier facteur, une stabilité physique des cibles et pour le second facteur, une stabilité géométrique qui restreint la variation possible de l'angle d'incidence du radar entre deux passages du satellite. Ainsi, l'état de surface du sol ne doit pas trop changer entre deux prises de vue (ce qui exclut la surface des mers par exemple), et le satellite doit repasser très près (quelques centaines de mètres au plus) de sa trajectoire précédente.

Si l'hypothèse précédente est vérifiée, l'évolution de la phase due au troisième facteur entre deux images radar peut être obtenue en construisant un interférogramme qui traduit la différence des phases des deux images. Cette différence peut s'analyser comme étant le fruit de quatre contributions :

- le rapprochement ou l'éloignement orbital des trajectoires du satellite entre les prises d'images. Comme cela a été dit plus haut, les orbites doivent être proches mais ne sont jamais identiques ni même parallèles dans la pratique,
- un effet stéréoscopique produit par la topographie, observée selon deux points de vue légèrement différents,
- le mouvement d'ensemble des cibles qui a eu lieu entre les prises d'images,
- l'évolution de la longueur de la propagation atmosphérique et les variations de phase d'origine ionosphérique. Ces dernières sont encore qualifiées "d'effets non-euclidiens", car les variations de phase subies par les différentes longueurs d'ondes ne peuvent s'expliquer par une augmentation ou une diminution commune du chemin optique.

Il est difficile, dans la pratique, d'évaluer séparément la contribution de chaque facteur influençant la phase.

On peut néanmoins s'aider des considérations suivantes :

- un effet de mouvement du sol doit se trouver sur tous les interférogrammes englobant un intervalle de temps donné, quels que soient les écarts orbitaux des prises d'images. Par exemple, si un mouvement du sol apparaît dans un interférogramme construit à partir d'images prises en Avril et en Mai, il doit être présent dans un interférogramme construit à partir d'images prises en Mars et en Juin ;
- un effet de propagation atmosphérique doit se retrouver sur tous les interférogrammes auxquels participe une image qui a été affectée par cet effet de propagation.

Les effets non-euclidiens peuvent être évalués par déduction, après avoir quantifié les autres facteurs affectant la phase. Cette quantification est toutefois rendue complexe par le fait que la mesure de la distance est ambiguë, n'étant donnée que modulo la longueur d'onde $\lambda$ du radar. En d'autres termes, si la longueur d'onde est de 5 cm, un déplacement de 2 cm est vu de la même façon qu'un déplacement de 7 cm. La mesure complète peut être restituée en "déroulant" la phase sur l'image, d'un point à un autre, pour faire apparaitre les nombres entiers de longueur d'onde absents de la mesure. On se reportera utilement à l'article "Satellite radar interferometry : Two-dimensional phase unwrapping" de Goldstein et al. paru dans Radio Science, vol. 23, N° 4, Pages 713 à 720, Juillet-Août 1988. L'opération de déroulement de la phase est cependant difficilement automatisable, et il n'existe pas, à la connaissance de la Demanderesse, de procédé permettant d'évaluer aisément et précisément les effets non-euclidiens.

La présente invention a ainsi pour objet de proposer un procédé d'imagerie permettant d'évaluer les effets non-euclidiens, notamment sans qu'il soit nécessaire de "dérouler" la phase pour ce faire.

Le procédé selon l'invention est défini dans la revendication 1. Très préférentiellement, m = 2 ou m = 3 et n = 1.

L'invention a également pour objet un dispositif pour la mise en oeuvre du procédé, tel que défini par la revendication 3.

L'invention sera mieux comprise à la lecture de la description qui va suivre, et à l'examen du dessin annexé sur lequel :

- la figure 1 est une vue schématique d'une plate-forme de satellite d'observation équipée de deux radars spatiaux conformément à l'invention,
- la figure 2 illustre très schématiquement le traitement des images provenant de chacun des radars équipant le satellite.

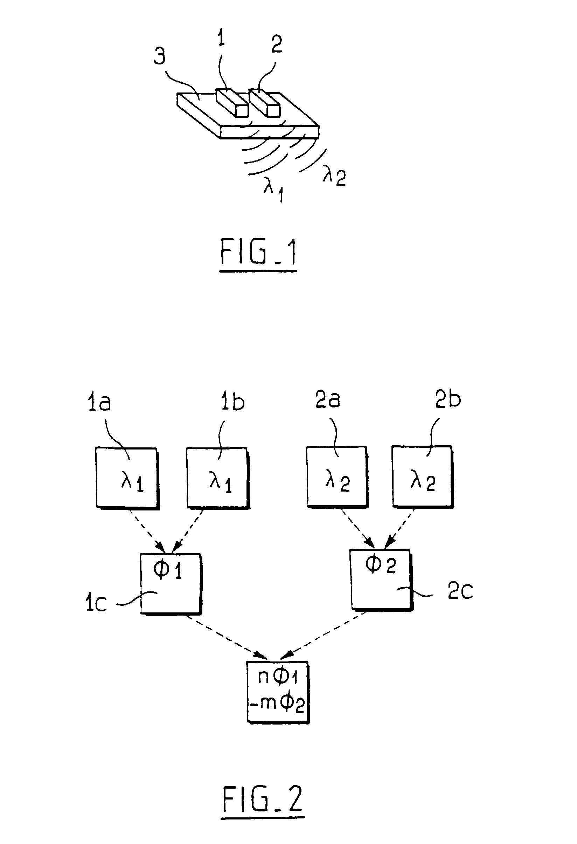

On a représenté sur la figure 1, très schématiquement, deux radars spatiaux 1, 2 à synthèse d'ouverture, connus en eux-mêmes et non décrits en détail, montés sur une plate-forme commune 3 d'un satellite d'observation de la terre.

Les deux radars 1, 2 sont destinés à travailler à des longueurs d'onde respectives $\lambda_1$ et $\lambda_2$ vérifiant la relation $m\,\lambda_1 = n\,\lambda_2$ où m et n sont des entiers.

Chaque radar est utilisé pour former un couple d'images radar référencées 1a et 1b pour le premier radar ét 2a et 2b pour le deuxième radar, à partir desquels sont construits de façon connue en soi deux interférogrammes respectifs 1c et 2c. Les images 1a, 2a sont obtenues simultanément. Il en est de même des images 1b, 2b.

Pour une même différence de marche géométrique D sur les interférogrammes 1c et 2c, on a les relations

$$D + E(\lambda_1) = k_1\,\lambda_1 + \lambda_1\,\phi_1 \qquad\qquad (1)$$

$$D + E(\lambda_2) = k_2\,\lambda_2 + \lambda_2\,\phi_2 \qquad\qquad (2)$$

$$m\,\lambda_1 = n\,\lambda_2 \qquad\qquad (3)$$

où $k_1$ et $k_2$ sont des entiers, $\phi_1$ et $\phi_2$ sont les phases respectivement mesurées sur les interférogrammes 1c et 2c, et $E(\lambda_1)$, $E(\lambda_2)$ traduisent les effets non-euclidiens affectant la propagation des ondes radar de longueurs d'ondes $\lambda_1$ et $\lambda_2$, que l'on cherche à évaluer.

Les équations (1) et (2) peuvent encore s'écrire

$$D = k_1\,\lambda_1 + \lambda_1\,[\phi_1 - E(\lambda_1)\,/\,\lambda_1] \qquad\qquad (4)$$

$$D = k_2 \lambda_2 + \lambda_2 [\phi_2 - E(\lambda_2) / \lambda_2] \tag{5}$$

En formant (4) - (5) on a

$$k_2 \lambda_2 - k_1 \lambda_1 = \lambda_1 [\phi_1 - E(\lambda_1) / \lambda_1] - \lambda_2 [\phi_2 - E(\lambda_2) / \lambda_2] \tag{6}$$

Compte tenu de (3) et de (6), on a

$$[m\, k_2 - n\, k_1]\, \lambda_1 = n\, \lambda_1 [\phi_1 - E(\lambda_1) / \lambda_1] - m\, \lambda_1 [\phi_2 - E(\lambda_2) / \lambda_2] \tag{7}$$

En prenant la partie fractionnaire de (7) on a

$$\mathrm{frac}\, (n\, \phi_1 - m\, \phi_2) = \mathrm{frac}\, (m\, E(\lambda_2) / \lambda_2 - n\, E(\lambda_1) / \lambda_1)$$

Connaissant $\phi_1$ et $\phi_2$ par lecture des interférogrammes 1c et 2c, on peut cartographier les effets non-euclidiens selon la valeur de la partie fractionnaire de

$$m\, E(\lambda_2)/\lambda_2 - n\, E(\lambda_1) /\lambda_1$$

Les valeurs de m et n sont de préférence limitées à 2 ou 3 au plus, en raison de l'augmentation de la contribution du bruit dans les interférogrammes multipliés et combinés, qui croit comme $(m^2 + n^2)^{1/2}$.

Finalement, l'invention, en utilisant deux radars montés sur la même plate-forme d'un satellite et travaillant avec des longueurs d'ondes dans un rapport entier ou fractionnaire simple, permet de séparer d'une façon aisée les effets non-euclidiens des autres effets affectant la phase, la multiplication d'une phase par un nombre entier étant facile à effectuer pour un homme du métier.

On peut ainsi, par des combinaisons linéaires d'interférogrammes et sans qu'il soit nécessaire de "dérouler" la phase :

- cartographier les effets de propagation d'origine ionosphérique,
- produire des interférogrammes débarrassés de tels effets.

L'invention trouve alors application pour les mesures de petits déplacements du sol, notamment pour :

- la mesure des déplacements co-sismiques, la recherche de déplacements pré- ou post-sismiques,
- la détection du gonflement des volcans avant éruption,
- la mesure des glissements de terrain,
- la mesure de la vitesse d'avancement des glaciers,
- la surveillance de l'enfoncement des plates-formes off-shore,
- la surveillance de la subsidence du sol lors d'exploitations minières, de gaz ou de pétrole, ou encore lors d'essais nucléaires souterrains,
- la classification des cultures par la mesure directe de la vitesse de croissance des végétaux.

## Revendications

1. Procédé pour évaluer les effets non-euclidiens affectant une image obtenue avec un radar spatial (1 ; 2),notamment le déphasage lié à la propagation de l'onde émise par ce radar au travers de l'ionosphère, caractérisé en ce qu'il comprend les étapes consistant à:

- former un premier (1c) et un deuxième (2c) interférogrammes à partir de couples d'images radar (1a, 1b ; 2a, 2b) obtenus en utilisant respectivement deux radars spatiaux (1, 2) travaillant à des longueurs d'ondes respectives $\lambda_1$ et $\lambda_2$ vérifiant la relation $m \lambda_1 = n \lambda_2$, où m et n sont des entiers, lesdits radars étant placés sur un même satellite,

- effectuer la combinaison linéaire $n\phi_1$-$m\phi_2$ des phases respectives $\phi_1$ et $\phi_2$ des premier et deuxième interférogrammes, la partie fractionnaire de cette combinaison linéaire étant représentative des effets non-euclidiens affectant les images desdits radars spatiaux ayant servi à la réalisation des interférogrammes.

2.  Procédé selon la revendication 1, caractérisé en ce que m est choisi dans l'ensemble [2 ; 3] et n=1.

3.  Dispositif pour la mise en oeuvre du procédé selon l'une des revendications 1 et 2, caractérisé en ce qu'il comprend un satellite équipé de deux radars spatiaux (1, 2) aptes à travailler respectivement aux dites longueurs d'ondes $\lambda_1$ et $\lambda_2$ et à fournir des couples d'images radar (1a, 1b ; 2a, 2b),des moyens pour former lesdits premier (1c) et deuxième (2c) interférogrammes à partir desdits couples d'images radar et des moyens pour effectuer ladite combinaison linéaire des phases respectives des premier et deuxième interférogrammes.

4.  Dispositif selon la revendication 3, caractérisé en ce que les radars spatiaux sont des radars à synthèse d'ouverture.


**Patentansprüche**

1.  Verfahren zur Bewertung der nicht-euklidischen Effekte in einem mit einem Weltraumradar (1 ; 2) erzeugten Bild, insbesondere der mit dem Fortschreiten der von diesem Radar ausgesendeten Welle durch die Ionosphäre zusammenhängenden Phasenverschiebung, dadurch charakterisiert, daß es die folgenden Schritte umfaßt:

    - Bildung eines ersten (1c) und eines zweiten (2c) Interferogramms ausgehend von Radarbildpaaren (1a, 1b ; 2a, 2b), die erhalten wurden jeweils unter Verwendung von zwei Weltraumradars (1, 2), die mit den Wellenlängen $\lambda_1$ bzw. $\lambda_2$ arbeiten und die Relation $m\lambda_1 = n\lambda_2$ erfüllen, wobei m und n ganze Zahlen sind, wobei die beiden Radars sich auf demselben Satelliten befinden,

    - Bildung der Linearkombination $n\phi_1$-$m\phi_2$ der jeweiligen Phasen $\phi_1$ und $\phi_2$ des ersten und zweiten Interferogramms, wobei der Bruchteil dieser Linearkombination nichteuklidische Effekte in diesen Weltraumradarbildern darstellt, die zur Bildung der Interferogramme verwendet wurden.

2.  Verfahren nach Anspruch 1, dadurch charakterisiert, daß m aus dem Satz [2 ; 3] ausgewählt wird und n = 1 ist.

3.  Vorrichtung zur Durchführung des Verfahrens nach einem der Ansprüche 1 und 2, dadurch charakterisiert, daß sie einen mit zwei Weltraumradars (1, 2) ausgerüsteten Satelliten, die jeweils mit den besagten Wellenlängen $\lambda_1$ bzw. $\lambda_2$ arbeiten und Radarbilderpaare (1a, 1b ; 2a, 2b) liefern können, Mittel zur Bildung des besagten ersten (1c) bzw. zweiten (2c) Interferogramms ausgehend von den besagten Radarbildern und Mittel zur Bildung der besagten Linearkombination der jeweiligen Phasen des ersten bzw. zweiten Interferogramms umfaßt.

4.  Vorrichtung nach Anspruch 3, dadurch charakterisiert, daß die Weltraumradars Strahleröffnungsradars sind.


**Claims**

1.  A method of evaluating the non-Euclidean effects that affect an image obtained with a space radar (1; 2), in particular the phase shift due to the wave emitted by said radar propagating through the ionosphere, the method being characterized in that it comprises the steps consisting in:

    · forming first and second interferograms (1c, 2c) from pairs of radar images (1a, 1b; 2a, 2b) obtained by using two respective space radars (1, 2) operating at respective wavelengths $\lambda_1$ and $\lambda_2$ satisfying the relationship $m\lambda_1 = n\lambda_2$ where $\underline{m}$ and $\underline{n}$ are integers, said radars being placed on the same satellite; and
    · performing the linear combination $n\phi_1$ - $m\phi_2$ of respective phases $\phi_1$ and $\phi_2$ of the first and second interferograms, with the fractional portion of said linear combination being representative of the non-Euclidean effects affecting the images of said space radars used in making the interferograms.

2.  A method according to claim 1, characterized in that m is selected from the set [2; 3] and n = 1.

3. Apparatus for implementing the method according to claim 1 or 2, characterized in that it comprises a satellite fitted with two space radars (1, 2) suitable for operating respectively at the wavelengths $\lambda_1$ and $\lambda_2$ and for providing pairs of radar images (1a, 1b; 2a, 2b), means for forming said first and second interferograms (1c, 2c) from said pairs of radar images, and means for performing said linear combination of respective phases of the first and second interferograms.

4. Apparatus according to claim 3, characterized in that the space radars are aperture synthesis radars.

FIG_1

FIG_2